(19) Europäisches Patentamt
European Patent Office
Office européen des brevets

(11) EP 1 532 194 B1

(12) # EUROPÄISCHE PATENTSCHRIFT

(45) Veröffentlichungstag und Bekanntmachung des Hinweises auf die Patenterteilung:
**14.06.2006 Patentblatt 2006/24**

(21) Anmeldenummer: **03764970.4**

(22) Anmeldetag: **10.07.2003**

(51) Int Cl.:
***C08G 77/50*** *(2006.01)* ***C08L 83/14*** *(2006.01)*
***C09D 183/14*** *(2006.01)*

(86) Internationale Anmeldenummer:
**PCT/EP2003/007521**

(87) Internationale Veröffentlichungsnummer:
**WO 2004/009678 (29.01.2004 Gazette 2004/05)**

(54) **VERZWEIGTE ALKENYLGRUPPEN AUFWEISENDE SILOXANPOLYMERE ALS ANTIMISTING ADDITIVE F R SILICONBESCHICHTUNGSZUSAMMENSETZUNGEN**

BRANCHED SILOXANE POLYMERS COMPRISING ALKENYL GROUPS AND USED AS ANTIMISTING ADDITIVES FOR SILICONE COATING COMPOSITIONS

POLYMERES DE SILOXANE RAMIFIES COMPRENANT DES GROUPES ALCENYLE, UTILISES COMME ADDITIFS ANTIVAPORISATION POUR DES COMPOSITIONS DE REVETEMENT SILICONE

(84) Benannte Vertragsstaaten:
**BE DE FR GB**

(30) Priorität: **18.07.2002 DE 10232668**

(43) Veröffentlichungstag der Anmeldung:
**25.05.2005 Patentblatt 2005/21**

(73) Patentinhaber: **Wacker Chemie AG**
**81737 München (DE)**

(72) Erfinder:
- **HERZIG, Christian**
  **83329 Feichten (DE)**
- **STALLBAUER, Reinhard**
  **84367 Gumpersdorf (DE)**
- **WEIZHOFER, Christine**
  **84375 Seibersdorf (DE)**

(74) Vertreter: **Deffner-Lehner, Maria**
**Wacker Chemie AG**
**Zentralbereich Patente, Marken und Lizenzen**
**Hanns-Seidel-Platz 4**
**81737 München (DE)**

(56) Entgegenhaltungen:
**WO-A-01/98420** **US-A- 6 034 225**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung von Antimisting Additiven zur Reduktion der Aerosolbildung in vernetzbaren Siliconbeschichtungszusammensetzungen.

Ein Trend in der Siliconbeschichtungsindustrie ist die Erhöhung der Maschinengeschwindigkeit zur Steigerung der Produktivität. Werden Siliconbeschichtungen auf das Substrat bei höheren Geschwindigkeiten, beispielsweise von über 300 m/min, aufgebracht, können sich feine Sprühnebel des Siliconbeschichtungssystems bilden. Dieses Aerosol entsteht am Siliconauftragswerk. Diese Sprühnebelbildung erweist sich als ein ernstes Problem bei der weiteren Steigerung der Beschichtungsgeschwindigkeit.

Diese Sprühnebelbildung kann durch den Zusatz von sogenannten Antimisting Additiven zum Siliconbeschichtungssystem reduziert werden.

In EP-A 716 115 (Dow Corning Corp.) bzw. in den korrespondierenden US 5,625,023, US 5, 698, 655 und US 5,994,454 werden Antimisting Additive, die durch Reaktion einer Organosiliciumverbindung, einer Oxyalkylengruppen enthaltender Verbindung und eines Katalysators erhalten werden, beschrieben. Durch die Zugabe dieser Oxyalkylengruppen aufweisenden Umsetzungsprodukte zu vernetzbaren Siliconbeschichtungssystemen wird die Bildung von Aerosol in schnellen Beschichtungsprozessen reduziert.

WO 01/98420 (Dow Corning Corp.) offenbart eine flüssige Silicon Antimisting Zusammensetzung, die durch Umsetzung

(a) eines Organohydrogenpolysiloxans mit mindestens 2 Si-H-Gruppen (SiH) mit
(b) eines Organoalkenylsiloxans mit mindestens 3 Alkenylgruppen (C=C) in
(c) Gegenwart eines Platinkatalysators und gegebenenfalls
(d) eines Inhibitors

erhalten wird.

Ein extrem großer Überschuss an Organoalkenylsiloxan ist notwendig, damit es zu keiner Vergelung kommt. Dieser Überschuss an höher funktionalisiertem Organoalkenylsiloxan, das zudem aufwendig synthetisierbar ist, beeinflusst die Release-Eigenschaften des Basis-Systems, der vernetzbaren Siliconbeschichtungszusammensetzung, erheblich..Weiterhin muss zur Verhinderung einer Vergelung ein Inhibitor zugesetzt werden.

In US-A 6,034,225 (Wacker-Chemie GmbH) sind Alkenylgruppen aufweisende Siloxanpolymere beschrieben, die verzweigt sind und worin die Organopolysiloxanblöcke über Kohlenwasserstoffbrücken verbunden sind.

Es bestand die Aufgabe Antimisting Additive für Siliconbeschichtungszusammensetzungen bereitzustellen, die die Aerosolbildung in schnellen Beschichtungsprozessen reduzieren, die mit den Siliconbeschichtungszusammensetzungen gut mischbar sind und die die Siliconbeschichtungszusammensetzungen nicht beeinträchtigen. Die Aufgabe wird durch die Erfindung gelöst.

Gegenstand der Erfindung ist die Verwendung von Antimisting Additiven in vernetzbaren Siliconbeschichtungszusammensetzungen zur Reduktion der Aerosolbildung, dadurch gekennzeichnet, dass als Antimisting Additive verzweigte Alkenylgruppen aufweisende Siloxanpolymere herstellbar, indem $\alpha,\omega$-Dialkenylsiloxanpolymere (1) der allgemeinen Formel

$$R^1_xR_{3-x}SiO(R_2Si\text{-}R^2\text{-}SiR_2O)_m(R_2SiO)_nSiR_{3-x}R^1_x \qquad (I)$$

wobei R gleiche oder verschiedene, gegebenenfalls halogenierte Kohlenwasserstoffreste mit 1 bis 18 Kohlenstoffatomen je Rest bedeuten,
$R^1$ ein endständig aliphatisch ungesättigter organischer Rest mit vorzugsweise 2 bis 10 Kohlenstoffatomen, bevorzugt ein endständig aliphatisch ungesättigter Kohlenwasserstoffrest mit 2 bis 10 Kohlenstoffatomen ist,
$R^2$ einen zweiwertigen organischen Rest, bevorzugt einen Alkylenrest, mit 2 bis 30 Kohlenstoffatomen je Rest oder einen zweiwertigen Silan- oder Siloxanrest mit 2 bis 10 Si-Einheiten bedeutet,
x gleich oder verschieden sein kann und 0 oder 1, vorzugsweise
1 ist, durchschnittlich 0,7 bis 1,0, vorzugsweise durchschnittlich 1,0 ist,
m gleich 0 oder eine ganze Zahl von 1 bis 10, vorzugsweise 0 ist,
und n gleich 0 oder eine ganze Zahl von 1 bis 1000,
vorzugsweise 20 bis 1000, bevorzugt 50 bis 500 ist,
mit mindestens 3 Si-gebundenen Wasserstoffatomen je Molekül aufweisenden Organosiliciumverbindungen (2) der allgemeinen Formel

$$\underset{II}{(H_aR_{3-a}SiO_{1/2})_e}\underset{III}{(H_bR_{2-b}SiO)_f}\underset{IV}{(H_cR_{1-c}SiO_{3/2})_g}\underset{V}{[R^3(CR^4HCH_2-)_z]_h}\underset{VI}{(R_d\overset{|}{Si}O_{(3-d)/2})_k}\underset{VII}{(-R^5-)_l}$$

wobei R die oben dafür angegebene Bedeutung hat,
$R^3$ einen drei- bis zehnwertigen aliphatisch gesättigten Kohlenwasserstoffrest mit 1 bis 20 Kohlenstoffatomen, der ein oder mehrere Heteroatome ausgewählt aus der Gruppe von Sauerstoff, Bor, Silicium und Titan enthalten kann,
$R^4$ ein Wasserstoffatom oder einen Alkylrest mit 1 bis 6 Kohlenstoffatomen je Rest,
$R^5$ einen zweiwertigen Kohlenwasserstoffrest mit 2 bis 30 Kohlenstoffatomen, der linear, verzweigt oder cyclisch sein kann und ein oder mehrere separate Sauerstoffatome enthalten kann,
a 0, 1, 2 oder 3, vorzugsweise 0 oder 1,
b 0, 1 oder 2, vorzugsweise 0 oder 1,
c 0 oder 1, vorzugsweise 0,
d 0, 1 oder 2, vorzugsweise 0 oder 1,
z eine ganze Zahl von 3 bis 10, vorzugsweise 3 oder 4, bevorzugt 3 ist,
e, f, g, h, k und l 0 oder eine ganze positive Zahl, vorzugsweise 0 oder eine ganze Zahl von 1 bis 40, bedeutet, mit der Maßgabe, dass wenn h und k eine ganze positive Zahl sind und 1 0 ist, die Strukurelemente V ausschließlich an die Strukturelemente VI gebunden sind, und
dass wenn h 0 ist und k und 1 eine ganze positive Zahl sind, die Strukturelemente VII an die Strukturelemente VI gebunden sind,
in Gegenwart von die Anlagerung von Si-gebundenem Wasserstoff an aliphatische Doppelbindung fördernden Katalysatoren (3) umgesetzt werden,
eingesetzt werden.

Die erfindungsgemäßen Antimisting Additive, die Alkenylgruppen aufweisenden Siloxancopolymere, haben den Vorteil, dass sie nicht nur die Aerosolbildung vernetzbarer Siliconbeschichtungszusammensetzungen in schnellen Beschichtungssystemen reduzieren sondern dass sie insbesondere in beliebigen Mengenverhältnissen homogen mit den vernetzbaren Siliconbeschichtungszusammensetzungen mischbar sind im Gegensatz zü den Polyglykolgruppen aufweisenden Antimisting Additiven gemäß der eingangs zitierten EP-A 716 115.

Weiterhin weisen die erfindungsgemäßen Antimisting Additive keine inhibierende Wirkung auf und sie sind lagerstabil. Die erfindungsgemäßen Antimisting Additive haben den Vorteil, dass sie vorab mit der Polymerkomponente (A) der vernetzbaren Siliconbeschichtungszusammensetzung abgemischt werden können. Sie sind damit einfach handhabbar und beeinträchtigen die Release-Eigenschaften des Basis-Systems, der vernetzbaren Siliconbeschichtungszusammensetzung, nicht.

Die erfindungsgemäßen, Alkenylgruppen aufweisenden Siloxancopolymere besitzen vorzugsweise eine Viskosität von 0,05 bis 500 000 Pa.s bei 25°C, bevorzugt 0,1 bis 100 000 Pa.s bei 25°C, besonders bevorzugt 0,2 bis 10 000 Pa.s bei 25°C.

In den erfindungsgemäßen, Alkenylgruppen aufweisenden Siloxancopolymeren sind die Siloxanblöcke über Kohlenwasserstoffgruppen miteinander verbunden, woraus eine Kohlenwasserstoff-Siloxan-Blockstruktur resultiert.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Reste $R^1$ sind Alkenylreste, wie der Vinyl-, 5-Hexenyl-, Cyclohexenyl-, 1-Propenyl-, Allyl-, 3-Butenyl- und 4-Pentenylrest, und Alkinylreste, wie der Ethinyl-, Propargyl- und 1-Propinylrest. Bevorzugt handelt es sich bei dem Rest $R^1$ um Alkenylreste, wobei der Vinylrest besonders bevorzugt ist.

Als α,ω-Dialkenylsiloxanpolymere (1) werden vorzugsweise solche die jeweils an beiden Enden je einen endständig aliphatisch ungesättigten Kohlenwasserstoffrest, bevorzugt Si-gebundenen Vinylrest, aufweisen, eingesetzt. In Formel (I) ist x dann 1; durchschnittlich ist x dann 1,0.

Bevorzugt werden als α,ω-Dialkenylsiloxanpolymere (1) solche der Formel

$$R^1R_2SiO(R_2SiO)_nSiR_2R^1 \qquad (I')$$

wobei R, $R^2$ und n die oben dafür angegebene Bedeutung haben, eigesetzt.

Als α,ω-Dialkenylsiloxanpolymere (1) können auch lineare Organopolysiloxane, wie sie in US 6,274,692 (incorporated by reference), insbesondere Spalte 2, Zeile 3 bis 27, beschrieben sind und die nicht an beiden Enden je einen endständigaliphatisch ungesättigten Kohlenwasserstoffrest, wie eine Si-gebundene Vinylgruppe, aufweisen, sondern an den Enden auch aliphatisch gesättigte Kohlenwasserstoffreste, wie Si-gebundene Methylgruppen, aufweisen, verwendet werden. In Formel (I) ist x dann durchschnittlich 0,7 bis 1,0.

Als α,ω-Dialkenylsiloxanpolymere (1) können auch solche, die durch Polyaddition von α,ω-Dihydrogendiorganopolysiloxane der Formel

$$HR_2SiO(SiR_2O)_iSiR_2H \qquad (VIII),$$

wobei R die oben dafür angegebene Bedeutung hat und
i 0 oder eine ganze Zahl von 1 bis 500 ist,
mit α,ω-Dienen
in Gegenwart von Hydrosilylierungskatalysatoren erhalten werden, eingesetzt werden.
Die so erhaltenen α,ω-Dialkenylsiloxanpolymere weisen an den Enden jeweils einen endständig aliphatisch ungesättigten Kohlenwasserstoffrest auf.
In Formel (I) ist x dann 1; durchschnittlich ist x dann 1,0.

Die α,ω-Dialkenylsiloxanpolymere (1) besitzen vorzugsweise eine Viskosität von 20 bis 20 000 mPa.s bei 25 °C, bevorzugt 50 bis 1 000 mPa.s bei 25 °C.

Beispiele für α,ω-Dialkenylsiloxanpolymer (1) sind
α,ω-Divinylpolydimethylsiloxan,
α,ω-Diallylpolydimethylsiloxan,
α,ω-Dihexenylpolydimethylsiloxan,
α,ω-Dioctenylpolydimethylsiloxan,
sowie Polyadditionsprodukte aus α,ω-Dihydrogendiorganopolysiloxane der Formel (IV) und Dienen wie
1,5-Hexadien,
1,7-Octadien,
1,9-Decadien,
1,11-Dodecadien,
1,13-Tetradecadien,
2,5-Dimethyl-1,5-hexadien,
3,5-Dimethyl-1,6-heptadien,
1,3-Divinylbenzol,
1,4-Divinylbenzol, 1,3-Diisopropenylbenzol,
Divinyldimethylsilan,
1,3-Divinyl-1,1,3,3-tetramethyldisiloxan,
wobei α,ω-Divinylpolydimethylsiloxane und α,ω-Dihexenylpolydimethylsiloxane bevorzugt sind.

Beispiele für Reste $R^2$ sind daher solche der Formel

$$-(CH_2)_6-$$

$$-(CH_2)_8-$$

$$-(CH_2)_{10}-$$

$$-(CH_2)_{12}-$$

$$-(CH_2)_{14}-$$

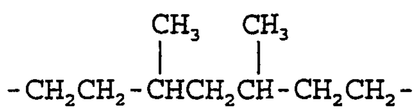

$-CH_2CH_2-C_6H_4-CH_2CH_2-$

wobei der Rest der Formel

$-(CH_2)_6-$

bevorzugt ist.

Als mindestens 3 Si-gebundene Wasserstoffatome aufweisende Organosiliciumverbindungen (2) werden vorzugsweise solche, die Struktureinheiten der Formel (II), (III) und gegebenenfalls (IV), insbesondere (II) und (III), enthalten, eingesetzt.

Die Organosiliciumverbindungen (2) weisen je Molekül vorzugsweise 4 bis 50 Si-gebundene Wasserstoffatome, bevorzugt 4 bis 20 Si-gebundene Wasserstoffatome auf. Insbesondere sind die Si-gebundenen Wasserstoffatome in den Struktureinheiten (II) mit a=1 und den Struktureinheiten (III) mit b=1 enthalten.

Bevorzugt werden als Organosiliciumverbindung (2) solche der Formel

$$H_yR_{3-y}SiO\ (SiR_2O)_o(SiRHO)_pSiR_{3-y}H_y \qquad (IX)$$

wobei R die oben dafür angegebene Bedeutung hat,
y 0, 1 oder 2,
o 0 oder eine ganze Zahl von 1 bis 1500 und
p eine ganze Zahl von 1 bis 200 ist,
mit der Maßgabe, dass mindestens 3 Si-gebundene Wasserstoffatome je Molekül vorliegen, verwendet.

Im Rahmen dieser Erfindung soll Formel IX so verstanden werden, dass o Einheiten $-(SiR^5{}_2O)-$ und p Einheiten $-(SiR^5HO)-$ in beliebiger Weise im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Als Organosiliciumverbindungen (2) werden vorzugsweise auch solche verwendet, die die Struktureinheiten (II), (VI) und (VII) enthalten. Solche Organosiliciumverbindungen sind in US-A 5,866,707 (incorporated by reference), insbesondere Spalte 1, Zeile 54 bis Spalte 2, Zeile 50, beschrieben.

Als Organosiliciumverbindungen (2) werden vorzugsweise auch solche verwendet, die die Struktureinheiten (II), (V), (VI) und gegebenenfalls (III) enthalten. Solche Organosiliciumverbindungen (2) sind in in US-A 5,691,435 (incorporated by reference), insbesondere Spalte 3, Zeile 45 bis Spalte 4, Zeile 29, und US-A 6,093,782 (incorporated by reference), insbesondere Spalte 3, Zeile 8 bis 47, beschrieben.

In der Struktureinheit V ist der Rest $R^3$ bevorzugt ein dreiwertiger Kohlenwasserstoffrest mit vorzugsweise 1 bis 20 Kohlenstoffatomen und z ist daher bevorzugt 3 und in der Struktureinheit VI ist d bevorzugt 0 oder 1.

Beispiele für Reste $R^3$ sind solche der Formel

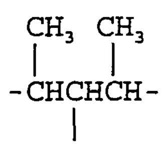

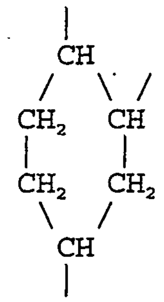

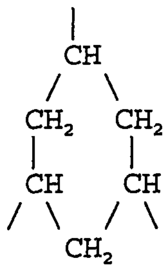

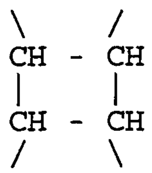

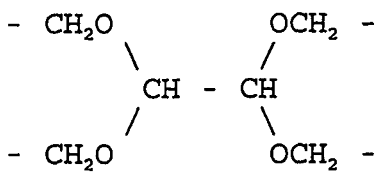

wobei der Rest der Formel

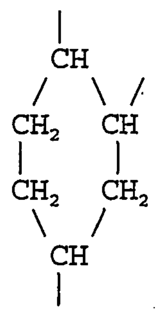

bevorzugt ist.

Beispiele für Alkylreste $R^4$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest. Bevorzugt ist $R^4$ ein Wasserstoffatom.

Beispiele für Kohlenwasserstoffreste $R^5$ sind solche der Formel

$-(CH_2)_2-$

$-(CH_2)_3-$

$-(CH_2)_4-$

$-(CH_2)_6-$

$-(CH_2)_8-$

$-CH_2-CH(CH_3)-CH_2-CH_2-CH(CH_3)-CH_2-$

Die Organosiliciumverbindungen (2) besitzen vorzugsweise eine durchschnittliche Viskosität von 20 bis 20 000 mPa.s bei 25°C, bevorzugt 100 bis 10 000 mPa.s bei 25°C.

$\alpha,\omega$-Dialkenylsiloxanpolymer (1) wird bei dem erfindungsgemäßen Verfahren in solchen Mengen eingesetzt, dass das Verhältnis der Anzahl von aliphatischer Doppelbindung in $\alpha,\omega$-Dialkenylsiloxanpolymer (1) zur Anzahl der Si-gebundenen Wasserstoffatome in Organosiliciumverbindung (2) 1,2 bis 50, bevorzugt 2 bis 20, besonders bevorzugt 3 bis 15 beträgt.

Je nach Einsatzverhältnis von (1) zu (2) werden Produkte erhalten, die nach vollständigem Verbrauch der in (2) ursprünglich enthaltenen Si-gebundenen Wasserstoffatome immer noch wechselnden Mengen an $\alpha,\omega$-Dialkenylsiloxanpolymer (1) enthalten. Da die erfindungsgemäßen Reaktionsprodukte aus (1) und (2) in vernetzbaren Siliconbeschichtungszusammensetzungen eingesetzt werden, in denen ohnehin das Basis-Polymer meist zum überwiegenden Teil aus $\alpha,\omega$-Dialkenylsiloxanpolymeren besteht, ist eine gewisse Restmenge an Edukt (1) nicht störend, sondern wird während des Vulkanisationsvorgangs in das entstehende Netzwerk eingebaut.

Abhängig von der Struktur der Edukte (1) und (2) und dem gewünschten Verzweigungsgrad des Umsetzungsproduktes, des erfindungsgemäßen Antimisting Additives, kann dieses von etwa 10 bis 95 Gew.-% Edukt (1) enthalten. Es ist vorteilhaft, eine möglichst hohe Konzentration an Umsetzungsprodukt aus (1) und (2) zu erhalten, so dass in bevorzugten Versionen der Anteil an restlichem $\alpha,\omega$-Dialkenylsiloxanpolymer (1) weniger als 75 Gew-%, vorzugsweise weniger als 50 Gew.-% beträgt.

In besonders gelagerten Fällen, in denen aus Gründen der Handhabung das nach der Umsetzung der Edukte (1) und (2) erhaltene Gemisch aus Umsetzungsprodukt und Edukt (1) eine niedrige Viskosität aufweisen soll, kann es erforderlich sein, eine eher niedrigere Konzentration des hochverzweigten Umsetzungsproduktes aus (1) und (2) anzustreben.

Als die Anlagerung von Si-gebundenem Wasserstoff an aliphatische Doppelbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6{*}6H_2O$, $Na_2PtCl_4{*}4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6{*}6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid.

Der Katalysator (3) wird im ersten Verfahrensschritt vorzugsweise in Mengen von 0,5 bis 50 Gew.-ppm (Gewichtsteilen je Million Gewichtsteilen), bevorzugt in Mengen von 1 bis 10 Gew.-ppm, jeweils berechnet als elementares Platin und bezogen auf das Gesamtgewicht von $\alpha,\omega$-Dialkenylsiloxanpolymer (1) und Organosiliciumverbindung (2) verwendet.

Der erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird das erfindungsgemäße Verfahren vorzugsweise bei einer Temperatur von 0°C bis 150°C, bevorzugt 20°C bis 120°C, besonders bevorzugt 20°C bis 80°C durchgeführt.

Bei dem erfindungsgemäßen Verfahren können vorzugsweise inerte, organische Lösungsmittel mitverwendet werden. Beispiele für inerte, organische Lösungsmittel sind Toluol, Xylol, Octanisomere, Heptanisomere, Butylacetat, Isopropylmyristat, 1,2-Dimethoxyethan, Tetrahydrofuran und Cyclohexan.

Die gegebenenfalls mitverwendeten inerten organischen Lösungsmittel können nach der Umsetzung destillativ

entfernt werden oder im Reaktionsgemisch verbleiben.

Das erfindungsgemäße Verfahren kann absatzweise, halbkontinuierlich oder vollkontinuierlich durchgeführt werden.

Alternativ zu dem einstufigen Verfahren zur Herstellung der erfindungsgemäßen verzweigten Alkenylgruppen aufweisenden Siloxanpolymeren können sie auch in einem zweistufigen Verfahren erhalten werden:

Hierzu werden Organosiliciumverbindungen (2) erst mit einer kleinen Menge $\alpha,\omega$-Dialkenylsiloxanpolymer (1) unter Platinkatalyse umgesetzt. Nach Abreaktion der Alkenylgruppen wird dieses Vorprodukt zügig in einen größeren Überschuss $\alpha,\omega$-Dialkenylsiloxanpolymer (1) dosiert, homogenisiert und gegebenenfalls durch weitere Katalysatorzufuhr ergänzt. Bevorzugt wird das zweitstufige Verfahren unter ähnlichen Bedingungen ausgeführt wie das einstufige Verfahren. Das zweistufige Verfahren wird dann vorteilhaft angewendet, wenn besonders hochmolekulare Verbindungen (2) gebraucht werden, die auf anderem Weg nur schwer zu erhalten sind.

Die erfindungsgemäßen Antimisting Additive werden zur Reduktion der Aerolsolbildung den vernetzbaren Siliconbeschichtungszusammensetzungen zugegeben.

Die erfindungsgemäßen Antimisting Additive, die Alkenylgruppen aufweisenden Siloxancopolymere, werden in den vernetzbaren Siliconbeschichtungszusammensetzungen vorzugsweise in Mengen von 0,5 bis 10 Gew.-%, bevorzugt 1 bis 5 Gew.-%, bezogen auf das Gesamtgewicht der vernetzbaren Siliconbeschichtungszusammensetzungen, eingesetzt.

Als vernetzbare Siliconbeschichtungszusammensetzungen werden vorzugsweise solche enthaltend

(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren

eingesetzt.

Gegenstand der Erfindung sind weiterhin vernetzbare Siliconbeschichtungszusammensetzungen mit reduzierter Aerosolbildung enthaltend

(X) erfindungsgemäße Antimisting Additive
(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren

Bei den vernetzbaren Siliconbeschichtungszusammensetzungen kann vorzugsweise eine Art des erfindungsgemäßen Antimisting Additivs (X) oder verschiedene Arten des erfindungsgemäßen Antimisting Additivs (X) eingesetzt werden.

Als Organopolysiloxane (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel X

$$R^6_zR^7_ySiO_{\frac{4-z-y}{2}} \quad (X),$$

wobei $R^6$ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest und
$R^7$ einen einwertigen Kohlenwasserstoffrest mit terminaler, aliphatischer Kohlenstoff-Kohlenstoff-Mehrfachbindung mit 2 bis 8 Kohlenstoffatomen je Rest bedeutet,
z 0, 1, 2 oder 3,
y 0, 1 oder 2
und die Summe z+y 0, 1, 2 oder 3 ist,

mit der Maßgabe, dass durchschnittlich mindestens 1,5 Reste $R^7$, bevorzugt durchschnittlich mindestens 2 Reste $R^7$, vorliegen, verwendet.

Bevorzugt als Organosiliciumverbindungen (A) sind Organopolysiloxane der allgemeinen Formel

$$R^7_uR^6_{3-u}SiO(SiR^6_2O)_v(SiR^6R^7O)_wSiR^6_{3-u}R^7_u \qquad (XI)$$

wobei $R^6$ und $R^7$ die oben dafür angegebene Bedeutung haben,
u 0, 1 oder 2,
v 0 oder eine ganze Zahl von 1 bis 1500 und
w 0 oder eine ganze Zahl von 1 bis 200 ist,
mit der Maßgabe, dass durchschnittlich mindestens 1,5 Reste $R^7$, bevorzugt durchschnittlich mindestens 2 Reste $R^7$, enthalten sind.

Im Rahmen dieser Erfindung soll Formel (XI) so verstanden werden, dass v Einheiten $-(SiR^6_2O)-$und w Einheiten $-(SiR^6R^7O)-$in beliebiger Weise im Organopolysiloxanmolekül verteilt sein können.

Als Organosiliciumverbindungen (A) können auch verzweigte Polymere mit endständigen ω-Alkenylgruppen, bevorzugt Si-gebundene Vinylgruppen, wie sie in US 6,258,913 (incorporated by reference), insbesondere Spalte 1, Zeile 62 bis Spalte 2, Zeile 35, beschrieben sind, verwendet werden.
Als Organosiliciumverbindungen (A) können auch lineare Organopolysiloxane, wie sie in US 6,274,692 (incorporated by reference), insbesondere Spalte 2, Zeile 3 bis 27, beschrieben sind und die nicht an beiden Enden je einen aliphatisch ungesättigten Kohlenwasserstoffrest, wie eine Si-gebundene Vinylgruppe, aufweisen sondern an den Enden auch aliphatisch gesättigte Kohlenwasserstoffreste, wie Si-gebundene Methylgruppen aufweisen, verwendet werden.
Als Organosiliciumverbindungen (A) können auch solche, wie sie in US-A 5,241,034 (incorporated by reference),insbesondere Spalte 16, Zeile 23 bis Spalte 17, Zeile 35, DE-A 195 22 144 (incorporated by reference), insbesondere Seite 2, Zeile 44 bis 67, DE-A 196 29 053 (incorporated by reference), insbesondere Seite 2, Zeile 51 bis Seite 3, Zeile 29, US-A 5,760,145 (incorporated by reference), insbesondere Spalte 2, Zeile 46 bis Spalte 4, Zeile 23 und US-A 6,265,497 (incorporated by reference), insbesondere Spalte 2, Zeile 3 bis 47 beschrieben sind, verwendet werden.

Die Organopolysiloxane (A) besitzen vorzugsweise eine durchschnittliche Viskosität von 100 bis 10 000 mPa.s bei 25°C.

Beispiele für Kohlenwasserstoffreste $R^6$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste $R^7$ sind Alkenylreste, wie der Vinyl-, 5-Hexenyl-, Allyl-, 3-Butenyl- und 4-Pentenylrest; und Alkinylreste, wie der Ethinyl-, Propargyl- und 1-Propinrest.

Als Organosiliciumverbindungen (B), die Si-gebundene Wasserstoffatome aufweisen, werden vorzugsweise lineare, cyclische oder verzweigte Organopolysiloxane aus Einheiten der allgemeinen Formel XII

$$R^6_jH_rSiO_{\frac{4-e-f}{2}} \qquad (XII),$$

wobei.
$R^6$ die oben dafür angegebene Bedeutung hat,
j 0, 1, 2 oder 3,
r 0, 1 oder 2
und die Summe von j+r 0, 1, 2 oder 3 ist,
mit der Maßgabe, dass durchschnittlich mindestens 2 Si-gebundene Wasserstoffatome vorliegen, verwendet.

Vorzugsweise enthalten die Organosiliciumverbindungen (B) mindestens 3 Si-gebundene Wasserstoffatome.

Bevorzugt werden als Organosiliciumverbindungen (B) Organopolysiloxane der allgemeinen Formel

$$H_qR^6_{3-q}SiO\ (SiR^6_2O)_s(SiR^6HO)_tSiR^6_{3-q}H_q \qquad (XIII)$$

wobei $R^6$ die oben dafür angegebene Bedeutung hat,
q 0, 1 oder 2,

s 0 oder eine ganze Zahl von 1 bis 1500 und
t 0 oder eine ganze Zahl von 1 bis 200 ist,
mit der Maßgabe, dass durchschnittlich mindestens 2 Si-gebundene Wasserstoffatome, vorliegen, verwendet.

Im Rahmen dieser Erfindung soll Formel XIII so verstanden werden, dass o Einheiten -($SiR^6_2O$)- und p Einheiten -($SiR^6HO$)-in beliebiger Weise im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Als Organosiliciumverbindungen (B) können auch solche,-wie sie in US-A 5,691,435 (incorporated by reference), insbesondere Spalte 3, Zeile 45 bis Spalte 4, Zeile 29, beschrieben sind, verwendet werden.

Die Organopolysiloxane (B) besitzen vorzugsweise eine durchschnittliche Viskosität von 10 bis 1 000 mPa.s bei 25°C.

Organosiliciumverbindung (B) wird vorzugsweise in Mengen von 0,5 bis 3,5, bevorzugt 1,0 bis 3,0 Grammatom Si-gebundenen Wasserstoff je Mol Si-gebundenen Restes mit aliphatischer Kohlenstoff-Kohlenstoff-Mehrfachbindung in der Organosiliciumverbindung (A) eingesetzt.

Als die Anlagerung von Si-gebundenem Wasserstoff an aliphatische Mehrfachbindungen fördernde Katalysatoren können auch bei den vernetzbaren Siliconbeschichtungszusammensetzungen die gleichen Katalysatoren eingesetzt werden, die auch bisher zur Förderung der Anlagerung von Si-gebundenem Wasserstoff an aliphatische Mehrfachbindung eingesetzt werden konnten. Als Bestandteil (C) werden vorzugsweise die oben genannten Katalysatoren (3) verwendet.

Die Katalysatoren (C) werden vorzugsweise in Mengen von 10 bis 1000 Gew.-ppm (Gewichtsteilen je Million Gewichtsteilen), bevorzugt 50 bis 200 Gew.-ppm, jeweils berechnet als elementares Platinmetall und bezogen auf das Gesamtgewicht der Organosiliciumverbindungen (A) und (B), eingesetzt.

Die vernetzbaren Siliconbeschichtungszusammensetzungen können die Anlagerung von Si-gebundenem Wasserstoff an aliphatische Mehrfachbindung bei Raumtemperatur verzögernde Mittel, sogenannte Inhibitoren (D), enthalten.

Als Inhibitoren (D) können auch bei den vernetzbaren Siliconbeschichtungszusammensetzungen alle Inhibitoren verwendet werden, die auch bisher für den gleichen Zweck verwendet werden konnten.

Beispiele für Inhibitoren (D) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel $HC{=}C{-}C(CH_3)(OH){-}CH_2{-}CH_2{-}CH{=}C(CH_3)_2$, käuflich erwerblich unter dem Handelsnamen "Dehydrolinalool" bei der Fa. BASF.

Wird Inhibitor (D) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (A) und (B), eingesetzt.

Beispiele für weitere Bestandteile, die bei den vernetzbaren Siliconbeschichtungszusammensetzungen mitverwendet werden können, sind Mittel zur Einstellung der Trennkraft, organische Lösungsmittel, Haftvermittler und Pigmente.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^8R^6_2SiO_{1/2} \text{ und } SiO_2,$$

sogenannte MQ-Harze, wobei $R^8$ ein Wasserstoffatom, ein Kohlenwasserstoffrest $R^6$, wie Methylrest, ein Alkenylrest $R^7$, wie Vinylrest, ist, und $R^6$ und $R^7$ die oben dafür angegebene Bedeutung haben und die Einheiten der Formel $R^8R^6_2SiO_{1/2}$ gleich oder verschieden sein können. Das Verhältnis von Einheiten der Formel $R^8R^6_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Beispiele für organische Lösungsmittel sind Benzine, z. B. Alkangemische mit einem Siedebereich von 70°C

bis 180°C, n-Heptan, Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, und Ketone, wie Methylethylketon und Cyclohexanon.

Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gesamtgewicht der Organosiliciumverbindungen (A) und (B), eingesetzt.

Die Reihenfolge beim Vermischen der Bestandteile (X), (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 70°C bis 180°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Gegenstand der Erfindung sind weiterhin Formkörper hergestellt durch Vernetzung der erfindungsgemäßen Zusammensetzungen.

Bei den Formkörper handelt es sich vorzugsweise um Beschichtungen, bevorzugt um klebrige Stoffe abweisende Überzüge.

Gegenstand der Erfindung ist weiterhin ein Verfahren zur Herstellung von Beschichtungen durch Auftragen von erfindungsgemäßen vernetzbaren Zusammensetzungen auf die zu beschichtenden Oberflächen und anschließende Vernetzung der Zusammensetzungen.

Die erfindungsgemäßen vernetzbaren Zusammensetzungen werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von erfindungsgemäßen vernetzbaren Zusammensetzungen auf die klebrige Stoffe abweisend zu machenden Oberflächen und anschließende Vernetzung der Zusammensetzungen.

Das Auftragen von den erfindungsgemäßen Zusammensetzungen auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den zu beschichtenden Oberflächen beträgt vorzugsweise 0,3 bis 6 $\mu$m, besonders bevorzugt 0,5 bis 2,0 $\mu$m.

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich.solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- öder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B.

Pappe, Kunstoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die die erfindungsgemäßen Antimisting Additiven enthaltenden vernetzbaren Siliconbeschichtungszusammensetzungen eignen sich insbesondere zur Verwendung in schnellen Beschichtungssystemen mit Beschichtungsgeschwindigkeiten vorzugsweise von 300 bis 1500 m/min, bevorzugt 400 bis 1000 m/min, bei denen die erfindungsgemäßen Zusammensetzungen bei hohen Geschwindigkeiten auf die zu beschichtenden Oberflächen aufgebracht werden.

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst.
Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen. Das off-line Verfahren und das in-line Verfahren kann mit den erfindungsgemäßen Zusammensetzungen bei einer Geschwindigkeit von 300 bis 1500 m/min, bevorzugt 400 bis 1000 m/min, betrieben werden.

1. Herstellung der verzweigten Alkenylgruppen aufweisenden Siloxanpolymere

Beispiel 1

244 g eines linearen α,ω-Divinylpolydimethylsiloxans mit der Jodzahl 4,2 werden mit 0,35 g eines Copolymers aus Dimethylsiloxy-, Hydrogenmethylsiloxy- und Trimethylsiloxy-Einheiten mit 0,72 Gew.-% Si-gebundenem Wasserstoff und einer Viskosität von 64 $mm^2/s$ bei 25°C homogen gemischt (C=C/SiH = 16). Danach werden 0,21 g einer 1,15 Gew.-%ige (bezogen auf elementares Platin) Lösung eines Platin-1,3-Divinyl-1,1,3,3-tetramethyldisiloxan-Komplexes in einem α,ω-Divinyldimethylpolysiloxan mit einer Viskosität von 1000 mPa.s bei 25°C, eine Lösung des sogenannten Karstedt-Katalysators (dessen Herstellung in US 3,775,452 beschrieben ist), zugesetzt und das Reaktionsgemisch auf 50°C erwärmt. Im Laufe von zwei Stunden erhöht sich die Viskosität des Ansatzes von 490 $mm^2/s$ auf 830 $mm^2/s$ bei 25°C. Das Produkt ist farblos und klar und hat ein Vinylequivalentgewicht von 6470 g/Mol C=C.

Beispiel 2

Im Unterschied zu Beispiel 1 wird ein verzweigtes Siloxanpolymer mit längeren Armsegmenten hergestellt, indem statt des α,ω-Divinylpolydimethylsiloxans mit der Jodzahl von 4,2 ein längeres α,ω-Divinylpolydimethylsiloxan mit der Jodzahl von 1,43 eingesetzt wird. Die Menge des Copolymers mit 0,72 Gew.-% Si-gebundenem Wasserstoff wird auf 0,12 g reduziert (C=C/SiH = 16). Nach identischer (wie in Beispiel 1 beschrieben) Katalyse bei analogem Reaktionsablauf erhält man ein farbloses, klares Produkt mit 14 400 $mm^2/s$ bei 25°C und einem Vinylequivalentgewicht von 18 960 g/Mol C=C.

Beispiel 3

Die Arbeitsweise von Beispiel 1 wird wiederholt mit der Abänderung, dass die Menge des α,ω-Divinylpolydimethylsiloxans auf 63% der dort eingesetzten Menge reduziert wird (C=C/SiH = 10). Nach Reaktionsende erhält man ein klares farbloses Produkt, das eine Viskosität von 1 270 $mm^2/s$ bei 25°C aufweist und damit wesentlich viskoser ist als das Produkt von Beispiel 1. Das Vinylequivalentgewicht beträgt nun 6 740 g / Mol C=C.
Das Produkt ist zwar aus den identischen Strukturelementen aufgebaut, im Vergleich zu dem aus Beispiel 1 aber wesentlich höher verzweigt.

Vergleichsversuch 1 gemäß WO 01/98420

Die Arbeitsweise von Beispiel 3 wird wiederholt mit der Abänderung, dass anstatt des linearen α,ω-Divinylpolydimethylsiloxans der Jodzahl 4,2 80 g eines über $MeSiO_{3/2}$-Gruppen (Me=Methylrest) verzweigtes vinylendständiges Polydimethylsiloxans mit einer Viskoität von 380 $mm^2/s$ bei 25°C und der Jodzahl 8,1 eingesetzt. Dieses Polymer enthält

durchschnittlich ca. 3 $CH_2$=$CHSiMe_2O_{½}$, -Gruppen pro Molekül. Der Ansatz weist ein Vinyl-/SiH-Verhältnis von 10 analog Beispiel 3 auf.
Nach Katalysatorzugabe analog Beispiel 3 bei 50°C steigt die Viskosität des Gemisches stark an. Wenig später entsteht ein Siloxangel, das in Toluol nicht mehr gelöst werden kann.

Beispiel 4

Ein im Vergleich zum Produkt von Beispiel 3 gleich hochverzweigtes Polymer, aber mit höherer Viskosität, lässt sich dadurch herstellen, dass man die Kettenlänge des α,ω-Divinylpolydimethylsiloxans vergrößert. Setzt man also 202 g eine linearen α,ω-Divinylpolydimethylsiloxans mit der Jodzahl 3,14 (statt 4,2) mit 0,35 g des Hydrogensiloxans, das 0,72 Gew.-% Si-gebundenen Wasserstoff aufweist, um (C=C/SiH = 10), so erhält man nun ein Produkt mit 2 300 $mm^2$/s bei 25°C und einem Vinylequivalentgewicht von 9 020 g / Mol C=C.

Beispiel 5

Stark verzweigte Siloxanpolymere sind auch durch Einsatz bereits verzweigter Hydrogensiloxane in Kombination mit linearen Vinylpolymeren zu erhalten: Setzt man also, wie in Beispiel 1, 244 g eines linearen α,ω-Divinylpolydimethylsiloxans mit der Jodzahl 4,2 mit 0,46 g eines verzweigten Siloxans, dessen Herstellung in US 5,866,707 in Bespiel 1 beschrieben wurde und das ausschließlich $HMe_2SiO_{½}$-Gruppen statt HMeSiO-Gruppen aufweist (Me=Methylrest) sowie eine Viskosität von 47 $mm^2$/s bei 25°C und einen Gehalt an Si-gebundenem Wasserstoff von 0,87 Gew.-% besitzt, um (C=C/SiH = 10), so erhält man nach vollständigem Umsatz der Si-gebundenen Wasserstoffatome ein klares Öl mit einer Viskosität von 970 $mm^2$/s (25°C) bei einem Vinylequivalentgewicht von 6 780 g / Mol C = C.

Beispiel 6

Analog der Arbeitsweise von Beispiel 1 werden 254 g eines α,ω-Divinylpolydimethylsiloxans der Jodzahl 7,0 mit 4,37 g eines linearen Copolymers aus Hydrogenmethylsiloxy-, Dimethylsiloxy- und Trimethylsiloxy-Einheiten mit 0,32 Gew.-% Si-gebundenem Wasserstoff und einer Viskosität von 38 $mm^2$/s bei 25°C in Gegenwart des in Beispiel 1 beschriebenen Platinkatalysators umgesetzt (C=C/SiH = 5,0). Das erhaltene klare farblose Öl hat eine Viskosität von 1 330 $mm^2$/s bei 25°C und ein Vinylequivalentgewicht von 4 620 g/ Mol C=C.

Beispiel 7

Die Arbeitsweise von Beispiel 6 wird wiederholt mit der Abänderung, dass ein Hydrogensiloxan eingesetzt wird, das einen noch geringeren Anteil an Si-gebundenen Wasserstoff enthält: Die 4,37 g des in Beispiel 6 verwendeten Copolymers werden gegen 24,1 g eines solchen mit nur 0,083 Gew.-% Si-gebundenem Wasserstoff und einer Viskosität von 97 $mm^2$/s bei 25°C ausgetauscht (C=C/SiH = 3,5). Nach vollständiger Umsetzung erhält man ein klares farbloses Öl mit einer Viskosität von 1940 $mm^2$/s (25°C) und einem Vinylequivalentgewicht von 5 570 g / Mol C=C.

Vergleichsversuch 2 gemäß WO 01/98420

Die Arbeitsweise von Beispiel 7 wird wiederholt mit der Abänderung, dass das lineare α,ω-Divinylpolydimethylsiloxan mit der Jodzahl 7,0 aus Beispiel 7 durch 220 g des T-verzweigten vinylendständigen Polydimethylsiloxans mit ca. 3 $CH_2$=$CHSiMe_2O_{½}$- Gruppen pro Molekül aus dem Vergleichsversuch 1 ersetzt wird, so dass der Ansatz wieder ein Vinyl-/SiH-Verhältnis von 3,5 analog Beispiel 7 aufweist. Nach identischer Katalyse erfolgt sehr schneller Viskositätsanstieg mit nachfolgender Vergelung des Reaktionsgemisches zu einem harten Kautschuk, der in Toluol unlöslich ist.

Beispiel 8

In einem zweistufigen Verfahren werden zunächst 43,4 g eines linearen Copolymerisats aus Hydrogenmethylsiloxan- und Dimethylsiloxaneinheiten, welches mit Trimethylsiloxanendeinheiten terminiert ist und 0,083 Gew.-% Si-gebundenen Wasserstoff sowie eine Viskosität von 97 $mm^2$/s bei 25°C aufweist, mit 21,8 g eines linearen α,ω-Divinylpolydimethylsiloxans der Jodzahl 4,2 unter Katalyse mit 10 ppm Platin in Form des in Beispiel 1 beschriebenen Platinkatalysators bei 40°C umgesetzt.
Die erhaltene Siloxanpolymermischung wird in weiteren 1 412 g des linearen α,ω-Divinylpolydimethylsiloxans der Jodzahl 4,2 zügig eindosiert und die Mischung dann auf einen Platin-Gehalt von 10 ppm mit dem obigen Platinkatalysator ergänzt. In einer schwach exothermen Reaktion wird nach zwei Stunden ein farbloses, klares Produkt mit einer Viskosität von 2 400 $mm^2$/s bei 25°C und einem Vinylequivalentgewicht von 7 350 g / Mol C=C erhalten (C=C/SiH = 6,4).

**2. Verwendung der verzweigten Alkenylgruppen aufweisenden Siloxanpolymere als Antimisting Additive:**

Beispiel 9:

Bei hohem Auftragsgewicht und bestimmten Beschichtungsformulierungen kann die Aerosolbildung bereits bei Maschinengeschwindigkeiten deutlich unter 500 m/min auftreten. Die Anwendung der erfindungsgemäßen verzweigten Siloxancopolymere zur Reduktion der Aerosolbildung erfolgte als Additiv in vernetzbaren Siliconbeschichtungssystemen für den Einsatz in solchen Beschichtungsprozessen.

Als Standardformulierung wurde eine Mischung aus
100 Gew.-teilen eines verzweigten Polysiloxans mit Vinyldimethylsiloxyendgruppen, das eine Viskosität von 420 mPa.s (25°C) und eine Jodzahl von 8,0 aufweist und gemäß Beispiel 3 von US 6,034,225 hergestellt wird,
3,6 Gew.-teile eines linearen Polysiloxans aus Hydrogenmethylsiloxan- und Trimethylsiloxaneinheiten im Molverhältnis 24 : 1,
1,04 Gew.-teile einer 1 Gew.-%igen (bezogen auf elementares Platin) Lösung eines Platin-1,3-Divinyl-1,1,3,3-tetramethyldisiloxan-Komplexes in einem $\alpha,\omega$-Divinyldimethylpolysiloxan mit einer Viskosität von 1000 mPa·s bei 25°C und
0,3 Gew.-teile 1-Ethinylcyclohexanol eingesetzt.

Die erfindungsgemäßen Additive gemäß den in Tabelle 1 angegebenen Herstellungsbeispielen wurden der Standardformulierung gemäß den in Tabelle 1 angegebenen Mengen zugesetzt. Als Vergleich wurde eine Standardformulierung ohne erfindungsgemäßes Additiv eingesetzt. Diese Mischungen wurden zur Papierbeschichtung eingesetzt.

Als Substrat wurde Papier der Fa. Ahlstrom mit der Bezeichnung Glassine Larice Tipo 325 mit 62 g/m$^2$ verwendet. Die Beschichtung erfolgte auf der Pilotbeschichtungsanlage der Fa. Dixon der Modellnummer 1060 mit einem 5-Walzen Auftragswerk, bei 150 m/min. Dabei wurde die Auftragsrolle mit 95% der Papiergeschwindigkeit gefahren. Die Beschichtung wurde im Trockenofen mit 3 m Länge bei 140°C ausgehärtet.

Die Aerosolbildung wurde mit dem Dusttrak Aerosol Monitor Model 8520 bestimmt. Die Probennahme erfolgte zwischen Siliconauftragswalze und Walzenspalt in einem Abstand von 12 cm zur Siliconauftragswalze.

Während der Beschichtungsversuche wurden die maximal angezeigten Aerosolwerte protokolliert. Das Beschichtungsgewicht wurde mittels Röntgenfluoreszenzanalyse in Referenz zu einem geeigneten Standard bestimmt und betrug 2,5 g/m$^2$.
Die Ergebnisse sind in Tabelle 1 zusammengefasst.

Tabelle 1:

| Additiv | Menge Additiv in % | Misting, mg/m$^3$ (Dusttrak) |
|---|---|---|
| Beispiel 2 | 10 | 7 |
| Beispiel 4 | 20 | 7 |
| Beispiel 6 | 10 | 1,5 |
| Beispiel 7 | 6 | 4,5 |
| Vergleich | - | 20 |

Die Vergleichsversuche zeigen, dass der Zusatz der erfindungsgemäßen verzweigten, vinylfunktionellen Siloxancopolymere als Antimisting Additive die Aerosolbildung vernetzbarer Siliconbeschichtungssysteme in schnellen Beschichtungsprozessen deutlich reduziert.

Beispiel 10:

Die Anwendung der erfindungsgemäßen Alkenylgruppen aufweisenden Siloxancopolymere zur Reduktion der Aerosolbildung erfolgt als Additiv in vernetzbaren Siliconbeschichtungssystemen für den Einsatz in schnellen Beschichtungsprozessen.

Als Standardformulierung wurde eine Mischung aus
100 Gew.-teile eines linearen $\alpha,\omega$-Divinyldimethylpolysiloxans mit einer Viskosität von 500 mPa's (25°C),
3,0 Gew.-teile eines linearen Polysiloxans aus Hydrogenmethylsiloxan- und Dimethylsiloxaneinheiten im Molverhältnis 2 : 1 mit Trimethylsiloxanendeinheiten und einer Viskosität von 34 mPa·s (25°C),
1,0 Gew.-teile einer 1 Gew.-%igen (bezogen auf elementares Platin) Lösung eines Platin-1,3-Divinyl-1,1,3,3-tetramethyldisiloxan-Komplexes in einem $\alpha,\omega$-Divinyldimethylpolysiloxan mit einer Viskosität von 1000 mPa·s bei 25°C und

0,3 Gew.-teile 1-Ethinylcyclohexanol
eingesetzt.

Die erfindungsgemäßen Additive gemäß den in Tabelle 2 angegebenen Herstellungsbeispielen wurden der Standardformulierung gemäß den in Tabelle 2 angegebenen Mengen zugesetzt. Als Vergleich wurde eine Standardformulierung ohne erfindungsgemäßes Additiv eingesetzt. Diese Mischungen wurden zur Papierbeschichtung eingesetzt.

Als Substrat wurde Papier der Fa. Tervasaari mit der Bezeichnung UPM Brilliant 55 mit 62 $g/m^2$ verwendet. Die Beschichtung erfolgte auf der Beschichtungsanlage der Fa. Kroenert mit einem 5 Walzen-Auftragswerk, bei 600 m/min. Dabei wurde die Auftragsrolle mit 95% der Papiergeschwindigkeit gefahren. Die Beschichtung wurde im Trocknungsofen mit 15 m Länge bei 180°C ausgehärtet. Dies entspricht einer Vernetzungszeit von 1,50 Sekunden.

Die Aerosolbildung wurde mit dem Dusttrak Aerosol Monitor Model 8520 bestimmt. Die Probennahme erfolgt zwischen Siliconauftragswalze und Walzenspalt in einem Abstand von 40 cm zur Siliconauftragswalze.
Der Blindwert an Aerosolen vor den Beschichtungsversuchen lag bei 0,04 $mg/m^3$. Während der Beschichtungsversuche wurden die minimalen und maximal angezeigten Aerosolwerte protokolliert und der Durchschnitt errechnet. Die durchschnittlich gemessenen Aerosolwerte während der Beschichtungsversuche wurden um den Blindwert von 0,04 $mg/m^3$ korrigiert, um den reinen Effekt der erfindungsgemäßen Antimisting Additive zu ermitteln.

Das Beschichtungsgewicht wurde mittels Röntgenfluoreszenzanalyse in Referenz zu einem geeigneten Standard bestimmt.

Da die Stärke der Aerosolbildung u.a. vom Beschichtungsgewicht abhängig ist, wurden die mittleren berechneten Aerosolwerte auf ein Beschichtungsgewicht von 1 $g/m^2$ zur besseren Vergleichbarkeit normiert.

Der Einfluss der erfindungsgemäßen Antimisting Additive auf die Aushärtung des Beschichtungssystems wurde sofort mittels Migrationstest bestimmt und parallel mittels Extraktion unvernetzter Anteile in MIBK (=Methylisobutylketon).

Der Einfluss der erfindungsgemäßen Antimisting Additive auf die Haftung des Beschichtungssystems zum Substrat wurde mittels Rub-off-Test bestimmt.

Die Bestimmung der Trennwerte erfolgte nach FINAT Testmethode Nr. 10. Es wurde der low speed Trennwert nach 3 Tagen bestimmt.

Es wurden handelsübliche selbstklebende 2,5 cm breite Klebebänder der Bezeichnung "Tesafilm K-7476" und "Tesafilm A 7475" (jeweils käuflich erhältlich bei der Fa. Beiersdorf AG, D-Hamburg) verwendet. FINAT Testmethode Nr. 10 sind in FINAT Technical Handbook 5th edition, 1999, Seiten 25 bis 29 beschrieben.

Die Testmethoden sind in der Broschüre DEHESIVE® Silicones Testmethoden der Fa. Wacker-Chemie GmbH beschrieben.
Die Ergebnisse sind in der Tabelle 2 zusammenfasst.

Tabelle 2:

| Additiv | Menge [%] | Misting [$mg/m^3$] mittel | mittl.Misting [$mg/m^3$] normiert auf 1,0 $g/m^2$ | Migration | Abrieb | Extrakt [%] in MIBK | Trennwert [cN/cm] A7475 | K7476 |
|---|---|---|---|---|---|---|---|---|
| Beisp. 7 | 3,0 | 1,05 | 0,55 | nein | nein | 3,25 | 14,6 | 22,3 |
| Vergleich | - | 73,0 | 38,0 | nein | nein | 3,05 | 14,8 | 23,2 |

Die Beispiele im Vergleich zum Vergleichsversuch ohne Additiv zeigen, dass der Zusatz der erfindungsgemäßen Antimisting Additive die Aerosolbildung vernetzbarer Siliconbeschichtungssysteme in schnellen Beschichtungsprozessen deutlich reduziert.

Nachteilige Effekte bei Migration und Substrathaftung (Abrieb) werden nicht beobachtet; der Anteil der extrahierbaren Anteile ist im Rahmen der Messgenauigkeit nicht erhöht. Die Trennwerte werden im Rahmen der Messgenauigkeit nicht beeinflusst.

**Patentansprüche**

**1.** Verwendung von Antimisting Additiven in vernetzbaren Siliconbeschichtungszusammensetzungen zur Reduktion der Aerosolbildung, **dadurch gekennzeichnet, dass** als Antimisting Additive verzweigte Alkenylgruppen aufweisende Siloxanpolymere herstellbar, indem $\alpha,\omega$-Dialkenylsiloxanpolymere (1) der allgemeinen Formel

$$R^1_xR_{3-x}SiO\ (R_2Si\text{-}R^2\text{-}SiR_2O)_m(R_2SiO)_nSiR_{3-x}R^1_x \qquad (I)$$

wobei R gleiche oder verschiedene, gegebenenfalls halogenierte Kohlenwasserstoffreste mit 1 bis 18 Kohlenstoffatomen je Rest bedeuten,
$R^1$ ein endständig aliphatisch ungesättigter organischer Rest ist,
$R^2$ einen zweiwertigen organischen Rest mit 2 bis 30 Kohlenstoffatomen je Rest oder einen zweiwertigen Silan- oder Siloxanrest mit 2 bis 10 Si-Einheiten bedeutet,
x gleich oder verschieden sein kann und 0 oder 1 ist, durchschnittlich 0,7 bis 1,0 ist,
m gleich 0 oder eine ganze Zahl von 1 bis 10,
und n gleich 0 oder eine ganze Zahl von 1 bis 1000,
mit mindestens 3 Si-gebundenen Wasserstoffatomen je Molekül aufweisenden Organosiliciumverbindungen (2) der allgemeinen Formel

$$\underset{II}{(H_aR_{3-a}SiO_{1/2})_e}\underset{III}{(H_bR_{2-b}SiO)_f}\underset{IV}{(H_cR_{1-c}SiO_{3/2})_g}\underset{V}{[R^3(CR^4HCH_2-)_z]_h}\underset{VI}{(R_dSiO_{(3-d)/2})_k}\underset{VII}{(-R^5-)_l}$$

wobei R die oben dafür angegebene Bedeutung hat,
$R^3$ einen drei- bis zehnwertigen aliphatisch gesättigten Kohlenwasserstoffrest mit 1 bis 20 Kohlenstoffatomen, der ein oder mehrere Heteroatome ausgewählt aus der Gruppe von Sauerstoff, Bor, Silicium und Titan enthalten kann,
$R^4$ ein Wasserstoffatom oder einen Alkylrest mit 1 bis 6 Kohlenstoffatomen je Rest,
$R^5$ einen zweiwertigen Kohlenwasserstoffrest mit 2 bis 30 Kohlenstoffatomen, der linear, verzweigt oder cyclisch sein kann und ein oder mehrere separate Sauerstoffatome enthalten
kann,
a 0, 1, 2 oder 3,
b 0, 1 oder 2,
c 0 oder 1,
d 0, 1 oder 2,
z eine ganze Zahl von 3 bis 10,
e, f, g, h, k und 1 0 oder eine ganze positive Zahl,
bedeutet,
mit der Maßgabe, dass wenn h und k eine ganze positive Zahl und 1 0 ist, die Strukurelemente V ausschließlich an die Strukturelemente VI gebunden sind, und
dass wenn h 0 ist und 1 eine ganze positive Zahl ist, die Strukturelemente VII an die Strukturelemente VI gebundenen sind,
in Gegenwart von die Anlagerung von Si-gebundenem Wasserstoff an aliphatische Doppelbindung fördernden Katalysatoren (3)
umgesetzt werden,
eingesetzt werden.

2. Verwendung nach Anspruch 1, **dadurch gekennzeichnet, dass** als $\alpha,\omega$-Dialkenylsiloxanpolymere (1) solche der allgemeinen Formel

$$R^1R_2SiO(R_2SiO)_nSiR_2R^1 \qquad (I')$$

wobei R, $R^1$ und n die in Anspruch 1 dafür angegebene Bedeutung haben,
eingesetzt werden.

3. Verwendung nach Anspruch 2, **dadurch gekennzeichnet, dass** als $\alpha,\omega$-Dialkenylsiloxanpolymere (1) $\alpha,\omega$-Divinylpolydimethylsiloxane eingesetzt werden.

4. Verwendung nach Anspruch 1, **dadurch gekennzeichnet, dass** als Organosiliciumverbindung (2) solche der allgemeinen Formel

$$H_yR_{3-y}SiO(SiR_2O)_o(SiRHO)_pSiR_{3-y}H_y \qquad (IX)$$

wobei R die oben dafür angegebene Bedeutung hat,
y 0, 1 oder 2,

o 0 oder eine ganze Zahl von 1 bis 1500 und
p eine ganze Zahl von 1 bis 200 ist,
mit der Maßgabe, dass mindestens 3 Si-gebundene Wasserstoffatome je Molekül enthalten sind,
eingesetzt werden.

5. Verwendung nach einem der Ansprüche 1 bis 4, **dadurch gekennzeichnet, dass** als vernetzbare Siliconbeschichtungszusammensetzung solche enthaltend

(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren

eingesetzt werden.

6. Vernetzbare Siliconbeschichtungszusammensetzung mit reduzierter Aerosolbildung enthaltend

(X) Antimisting Additive nach einem der Ansprüche 1 bis 4
(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren

7. Formkörper hergestellt durch Vernetzung der Zusammensetzungen gemäß Anspruch 6.

8. Formkörper gemäß Anspruch 7, **dadurch gekennzeichnet, dass** es sich um Beschichtungen handelt.

9. Formkörper gemäß Anspruch 8, **dadurch gekennzeichnet, dass** es sich um klebrige Stoffe abweisende Überzüge handelt.

10. Verfahren zur Herstellung von Beschichtungen durch Auftragen von vernetzbaren Zusammensetzungen gemäß Anspruch 6 auf die zu beschichtenden Oberflächen und anschließende Vernetzung der Zusammensetzungen.

11. Verfahren zur Herstellung von klebrige Stoffe abweisende Überzüge durch Auftragen von vernetzbaren Zusammensetzungen gemäß Anspruch 6 auf die klebrige Stoffe abweisend zu machenden Oberflächen und anschließende Vernetzung der Zusammensetzungen.

## Claims

1. Use of antimisting additives in crosslinkable silicone coating compositions for reducing the formation of aerosol, **characterized in that** use is made as antimisting additives of siloxane polymers containing branched alkenyl groups and preparable by reacting
$\alpha,\omega$-dialkenylsiloxane polymers (1) of the general formula

$$R^1_xR_{3-x}SiO\ (R_2Si\text{-}R^2\text{-}SiR_2O)_m\ (R_2SiO)_nSiR_{3-x}R^1_x \qquad (I)$$

where R denotes identical or different, unhalogenated or halogenated hydrocarbon radicals having from 1 to 18 carbon atoms per radical,
$R^1$ is a terminally aliphatically unsaturated organic radical,
$R^2$ is a divalent organic radical having 2 to 30 carbon atoms per radical or a divalent silane or siloxane radical having 2 to 10 Si units,
x can be identical or different and is 0 or 1, on average from 0.7 to 1.0,
m is 0 or an integer from 1 to 10,

and n is 0 or an integer from 1 to 1000, with organosilicon compounds (2) containing at least 3 Si-bonded hydrogen atoms per molecule and of the general formula

$$\underset{II}{(H_aR_{3-a}SiO_{1/2})_e}\underset{III}{(H_bR_{2-b}SiO)_f}\underset{IV}{(H_cR_{1-c}SiO_{3/2})_g}\underset{V}{[R^3(CR^4HCH_2-)_z]_h}\underset{VI}{(R_dSiO_{(3-d)/2})_k}\underset{VII}{(-R^5-)_l}$$

where R is as defined above,
$R^3$ is a trivalent to decavalent aliphatically saturated hydrocarbon radical having 1 to 20 carbon atoms, which may contain one or more heteroatoms selected from the group of oxygen, boron, silicon and titanium,
$R^4$ is a hydrogen atom or an alkyl radical having from 1 to 6 carbon atoms per radical,
$R^5$ is a divalent hydrocarbon radical having from 2 to 30 carbon atoms, which can be linear, branched or cyclic and may contain one or more separate oxygen atoms,
a is 0, 1, 2 or 3,
b is 0, 1 or 2,
c is 0 or 1,
d is 0, 1 or 2,
z is an integer from 3 to 10,
e, f, g, h, k and 1 are each 0 or a positive integer,
with the proviso that if h and k are each a positive integer and 1 is 0, the structural elements V are bonded exclusively to the structural elements VI, and
that if h is 0 and 1 is a positive integer, the structural elements VII are bonded to the structural elements VI,
in the presence of catalysts (3) which promote the addition of Si-bonded hydrogen onto aliphatic double bond.

**2.** Use according to Claim 1, **characterized in that** α,ω-dialkenylsiloxane polymers (1) used are those of the general formula

$$R^1R_2SiO\ (R_2SiO)_nSiR_2R^1 \qquad (I')$$

where R, $R^1$ and n are as defined in Claim 1.

**3.** Use according to Claim 2, **characterized in that** α,ω-dialkenylsiloxane polymers (1) used are α,ω-divinylpolydimethylsiloxanes.

**4.** Use according to Claim 1, **characterized in that** as organosilicon compound (2) use is made of that of the general formula

$$H_yR_{3-y}SiO(SiR_2O)_o(SiRHO)_pSiR_{3-y}H_y \qquad (IX)$$

where R is as defined above,
y is 0, 1 or 2,
o is 0 or an integer from 1 to 1500 and
p is an integer from 1 to 200,
with the proviso that there are at least 3 Si-bonded hydrogen atoms per molecule.

**5.** Use according to any one of Claims 1 to 4, **characterized in that** use is made as crosslinkable silicone coating compositions of those comprising

(A) organosilicon compounds having radicals containing aliphatic carbon-carbon multiple bonds,
(B) organosilicon compounds containing Si-bonded hydrogen atoms,
(C) catalysts which promote the addition of Si-bonded hydrogen onto aliphatic multiple bond,
and if desired
(D) inhibitors.

**6.** Crosslinkable silicone coating composition featuring reduced aerosol formation, comprising

(X) antimisting additives according to any one of Claims 1 to 4,
(A) organosilicon compounds having radicals containing aliphatic carbon-carbon multiple bonds,
(B) organosilicon compounds containing Si-bonded hydrogen atoms,
(C) catalysts which promote the addition of Si-bonded hydrogen onto aliphatic multiple bond,
and if desired
(D) inhibitors.

**7.** Shaped bodies produced by crosslinking the compositions of Claim 6.

**8.** Shaped bodies according to Claim 7, **characterized in that** they are coatings.

**9.** Shaped bodies according to Claim 8, **characterized in that** they are coatings which repel tacky substances.

**10.** Process for producing coatings by applying crosslinkable compositions according to Claim 6 to the surfaces that are to be coated and then crosslinking the compositions.

**11.** Process for producing coatings which repel tacky substances, by applying crosslinkable compositions according to Claim 6 to the surfaces that are to be made repellent to tacky substances and then crosslinking the compositions.

## Revendications

**1.** Utilisation d'additifs antibuée dans des compositions réticulables de revêtement de silicone pour la réduction de la formation d'un aérosol, **caractérisée en ce qu'**on utilise comme additifs antibuée des polymères de siloxane présentant des groupes alcényle, pouvant être préparés **en ce que** des polymères d'α-ω-dialcénylsiloxane (1) de formule générale

$$R^1_xR_{3-x}SiO(R_2Si\text{-}R^2\text{-}SiR_2O)_m(R_2SiO)_nSiR_{3-x}R^1_x \qquad (I)$$

où R signifie des radicaux hydrocarbonés identiques ou différents, le cas échéant halogénés, comprenant 1 à 18 atomes de carbone par radical,
$R^1$ représente un radical organique aliphatiquement insaturé en position terminale,
$R^2$ représente un radical organique divalent comprenant 2 à 30 atomes de carbone par radical ou un radical silane ou siloxane divalent comprenant 2 à 10 unités Si,
x peut être identique ou différent et vaut 0 ou 1, en moyenne 0,7 à 1,0,
m vaut 0 ou un nombre entier de 1 à 10,
et n vaut 0 ou un nombre entier de 1 à 1000, sont transformés avec des composés organosiliciés (2) présentant au moins trois atomes d'hydrogène liés par Si par molécule de formule générale

$$\underset{II}{(H_aR_{3-a}SiO_{1/2})_e}\underset{III}{(H_bR_{2-b}SiO)_f}\underset{IV}{(H_cR_{1-c}SiO_{3/2})_g}\underset{V}{[R^3(CR^4HCH_2-)_z]_h}\underset{VI}{(R_dSiO_{(3-d)/2})_k}\underset{VII}{(-R^5-)_l}$$

où R a la signification indiquée ci-dessus,
$R^3$ signifie un radical hydrocarboné trivalent à décavalent, aliphatiquement saturé, comprenant 1 à 20 atomes de carbone, qui peut contenir un ou plusieurs hétéroatomes du groupe formé par l'oxygène, le bore, le silicium et le titane,
$R^4$ signifie un atome d'hydrogène ou un radical alkyle comprenant 1 à 6 atomes de carbone par radical,
$R^5$ signifie un radical hydrocarboné divalent comprenant 2 à 30 atomes de carbone, qui peut être linéaire, ramifié ou cyclique et qui peut contenir
un ou plusieurs atomes d'oxygène séparés,
a vaut 0, 1, 2 ou 3,
b vaut 0, 1 ou 2,
c vaut 0 ou 1,
d vaut 0, 1 ou 2,
z vaut un nombre entier de 3 à 10,

e, f, g, h, k et 1 valent 0 ou un nombre entier positif,
à condition que, lorsque h et k valent un nombre entier positif et 1 vaut 0, les éléments de structure V soient liés exclusivement aux éléments de structure VI et
lorsque h vaut 0 et 1 vaut un nombre entier positif, les éléments de structure VII soient liés aux éléments de structure VI, en présence de catalyseurs (3) favorisant l'addition d'hydrogène lié par Si sur une double liaison aliphatique.

**2.** Utilisation selon la revendication 1, **caractérisée en ce qu'**on utilise comme polymères d'α,ω-dialcénylsiloxane (1) ceux de formule générale

$$R^1R_2SiO\ (R_2SiO)\ _nSiR_2R^1 \qquad (I')$$

où R, $R^1$ et n ont la signification indiquée dans la revendication 1.

**3.** Utilisation selon la revendication 2, **caractérisée en ce qu'**on utilise comme polymères d'α,ω-dialcénylsiloxane (1) des α,ω-divinylpolydiméthylsiloxanes.

**4.** Utilisation selon la revendication 1, **caractérisée en ce qu'**on utilise comme composés organosiliciés (2) ceux de formule générale

$$H_yR_{3-y}SiO(SiR_2O)_o(SiRHO)_pSiR_{3-y}H_y \qquad (IX)$$

R ayant la signification susmentionnée,
y valant 0, 1 ou 2,
o valant 0 ou un nombre entier de 1 à 1500 et
p valant un nombre entier de 1 à 200,
à condition qu'au moins 3 atomes d'hydrogène liés par Si soient contenus par molécule.

**5.** Utilisation selon l'une quelconque des revendications 1 à 4, **caractérisée en ce qu'**on utilise comme compositions réticulables de revêtement de silicone celles contenant

(A) des composés organosiliciés qui présentent des radicaux avec des liaisons multiples carbone-carbone aliphatiques,
(B) des composés organosiliciés avec des atomes d'hydrogène liés par Si
(C) des catalyseurs favorisant l'addition d'hydrogène lié par Si sur une liaison multiple aliphatique
et le cas échéant
(D) des initiateurs.

**6.** Composition réticulable de revêtement de silicone avec une formation réduite d'aérosol, contenant

(X) des additifs antibuée selon l'une quelconque des revendications 1 à 4,
(A) des composés organosiliciés qui présentent des radicaux avec des liaisons multiples carbone-carbone aliphatiques,
(B) des composés organosiliciés avec des atomes d'hydrogène liés par Si
(C) des catalyseurs favorisant l'addition d'hydrogène lié par Si sur une liaison multiple aliphatique
et le cas échéant
(D) des initiateurs.

**7.** Corps façonné préparé par réticulation des compositions selon la revendication 6.

**8.** Corps façonnés selon la revendication 7, **caractérisés en ce qu'**il s'agit de revêtements.

**9.** Corps façonnés selon la revendication 8, **caractérisés en ce qu'**il s'agit de revêtements repoussant les substances adhésives.

**10.** Procédé de fabrication de revêtements par application de compositions réticulables selon la revendication 6 sur les surfaces à revêtir et réticulation consécutive des compositions.

**11.** Procédé de fabrication de revêtements repoussant les substances adhésives par application de compositions réticulables selon la revendication 6 sur les surfaces à rendre répulsives aux substances adhésives et réticulation consécutive des compositions.